# EUROPEAN PATENT SPECIFICATION

(11) **EP 2 530 201 B1**
(45) Date of publication and mention of the grant of the patent: **05.07.2017**
(21) Application number: 10843781.5
(22) Date of filing: 25.05.2010
(51) Int. Cl.: E01B 7/14

(54) **TRAM CROSSING STRUCTURE WITH MOVABLE POINT**
STRASSENBAHNKREUZUNG MIT BEWEGLICHEM PUNKT
STRUCTURE DE CROISEMENT DE TRAMWAY À POINTE MOBILE

(30) Priority: 25.01.2010 ES 201030084
(43) Date of publication of application: 05.12.2012
(73) Proprietor: Amurrio Ferrocarril Y Equipos, S.a., 01470 Amurrio, Alava (ES)
(72) Inventor: GÓMEZ ARBERAS, Idoia, E-01470 Amurrio (Álava) (ES)
(74) Representative: Ungria López, Javier
(86) International application number: PCT/ES2010/070349
(87) International publication number: WO 2011/089285

(56) References cited:
- EP-A2- 1 538 264
- WO-A1-03/085200
- CN-Y- 2 361 662
- CN-Y- 2 361 662
- ES-A1- 2 137 807
- ES-A1- 2 137 807
- ES-A1- 2 265 237
- GB-A- 1 543 800
- GB-A- 190 405 017
- GB-A- 190 405 017
- JP-U- 58 038 801
- JP-U- 58 038 801
- US-A- 402 830
- US-A- 402 830
- US-A- 837 807
- US-A- 837 807
- US-A- 1 634 638
- US-A- 1 634 638
- US-A- 2 449 757
- US-A- 2 449 757

## Description

### OBJECT OF THE INVENTION

As expressed in the title of this specification the present invention relates to a tram movable point turnout structure that improves the currently existing turnouts, facilitating the handling, as well as the replacement operations of worn parts and making it possible to completely eliminate the handling noise and also the bending stresses to which the movable points of the conventional turnouts are subjected.

### BACKGROUND OF THE INVENTION

The turnout is a track apparatus that allows the separation of a rail track into two or more tracks, the axes which tangentially contact with that of the first one or at a very small angle with it.

The simplest case of a turnout is the one called simple, or with two tracks that gives way to the circulation that take it to one track or the other. The main one receives the name of direct track and the other the diverging track.

The separation and the turnout of the rolling of both tracks is produced by using the following elements: the turnout and the turnout, which along with the joining rails between them, form the three main parts of the apparatus these being the turnout, the joining or intermediate rails and the turnout itself.
- Thus, the turnout is formed by two tongue-stock rail (half-turnout) assemblies, allowing the splitting of the rolling threads.
- The joining intermediate rails connect said turnout with the turnout.
- The turnout itself, which is materialized in the intersection of the right lane (left) of the direct track with the left lane (right) of the diverging track.

The turnout is the element of the turnout where there is the superposition of the travelled roads. The most common one consists of common turnout, check rails and rails. The turnout of common turnouts is the joining of two rails that intersect with each other. To allow the passage of the flange of the wheels a discontinuity is introduced in both rails, which empty space is called a gap. The extension that the rails have to allow the holding of the wheel rolling on the exterior end of the rim when the flange goes through the gap is called wing rails.

The guard rails are intended to ensure the rail axis guiding when one of its wheels crosses the gap, avoiding the derailment of the vehicle and the deterioration of the common turnout. During the transit of the axles of the vehicles through the turnout, the collision of the wheels on common turnout areas may occur.

These collisions reduce the useful life of both the turnout itself and the movable material circulating on it causing noise and violent movements affecting the comfort of the passengers.

The shocks have two important consequences:
- they produce noises that bother the neighbours since these are apparatus installed in cities.
- they produce knocking that bothers the passengers of the tramway and they also produce wear on the common turnout itself and the wheels of the tramway.

To ensure the safe passage of the vehicles through the turnout (without noises or knocking), it is necessary to eliminate the gap.

Moving elements are inserted to suppress the gap removing it, keeping the corresponding common crossing wing rail. In this way, the check rails are unnecessary.

Presently to eliminate the gap, there are essentially two typologies:
- the turnout with movable point common turnout.
- the turnout with movable wing rails.

The flexible movable point turnout with common turnout as its name suggests, is a procedure to remove the gap in this type of common turnouts by bending the point of the common turnout, attaching one of its sides to the corresponding wing rail. In this way the gap disappears.

The central block of the flexible movable common turnout consists of a forged, single piece, manufactured from standardised steel (as shown, for instance, in ES 2 265 237 A1). This mechanism has the following drawbacks:
- A lot of handling effort is needed to move it because the point acts like a built-in beam.
- Difficulty when having to replace the tip when it wears out, since it is recessed and all the elements holding it have to be released and reassembled.
- Noise when carrying out the change although the noise when there is passing traffic is eliminated, the point, being recessed, when it is split and is free to move, does so producing the strong shake.
- It requires anti-lift since it is a long piece, a mechanism that prevents it from lifting is needed, especially if the trams are equipped with electromagnetic brakes.

The turnout with movable wing rails makes it possible to totally remove the gap totally removing the gap keeping the point of the common turnout fastened and moving the corresponding wing rail.

This mechanism has two major drawbacks:
- The development of an actuation and locking device of the wing rails that is sufficiently safe and reliable.
- The side guiding forces of the vehicles push the movable wing rail attached to one of the faces of the point of the fastened common turnout, trying to detach therefrom which would cause the derailment of the vehicle in the event it occurs.

### DESCRIPTION OF THE INVENTION

For the purpose of achieving the objectives and avoiding the drawbacks mentioned in the preceding paragraphs, the invention proposes to a movable tram turnout structure that has a characteristic structure that facilitates the handling and also the operations of replacement of worn parts, making it possible to totally eliminate the handling noise.

The turnout structure is characterised in that it comprises a support cradle located in a gap corresponding to an empty space which interrupts the continuity of two rails turnout from two different tracks, so that said support cradle comprises a central space where a movable point is attached by using a transverse guidance system allowing said movable point to be moved without bending stress on the same. Hence, depending on the two end positions that the movable point can take in combination with the structure of the support cradle comprising of a fastened element, one or another lane of the two tracks intersecting is selected to direct the corresponding wheel of the railway or tramway by the track selected in simultaneous combination with the movement of blades.

Therefore, the support cradle has two pairs of end rail sections that are a continuation of two interrupted rails that cross from the two different tracks so that such end rail sections of the support cradle are interrupted in a central area (central space) where the movable point with transverse displacement is located.

The movable point has two side rolling rail portions that converge towards the narrowest end of said movable point, so that depending on the end position on said movable point, the wheel of the railway or tramway will rest on one or the other side rolling portion that will be a continuation of the respective pair of end rail sections of the support cradle.

Other characteristics and advantages of the turnout structure of the invention, as defined by claim 1, are the following:
- The point is completely displaced, since it is not recessed like it is conventionally done.
- The fastening guiding of the movable point is through the use of sliding runners, screwed to the common turnout giving rise to the high-precision handling assembly. These guides are commonly used for guiding heads and tables in machine-tools.
- Total elimination of the handling noise, both in the direct track and the diverging track.
- The part of the turnout called support cradle is a hollow manganese steel casting that allows the insertion of the movable point and the fastening of its guidance elements.
- The support cradle has stops that make the movable point rigid opposite said support cradle when the tramway passes over the same.
- If it were necessary to replace the movable point, it only has to be released from the cars and then change it, without the need to remove the entire apparatus.
- The narrowest part of the movable point is fastened by two anti-lift flanges to prevent said area from rising.
- It is not necessary to make a check rail, since the width of track is maintained during the entire passage of the convoy by the entire turnout.
- Smaller than those of the flexible point.
- The actuation and locking system of the movable point is generally very similar to that used in the turnout.

Next, in order to facilitate a better understanding of this specification and forming an integral part of the same, figures wherein with illustrative character are attached hereto.

### BRIEF DESCRIPTION OF THE DRAWINGS

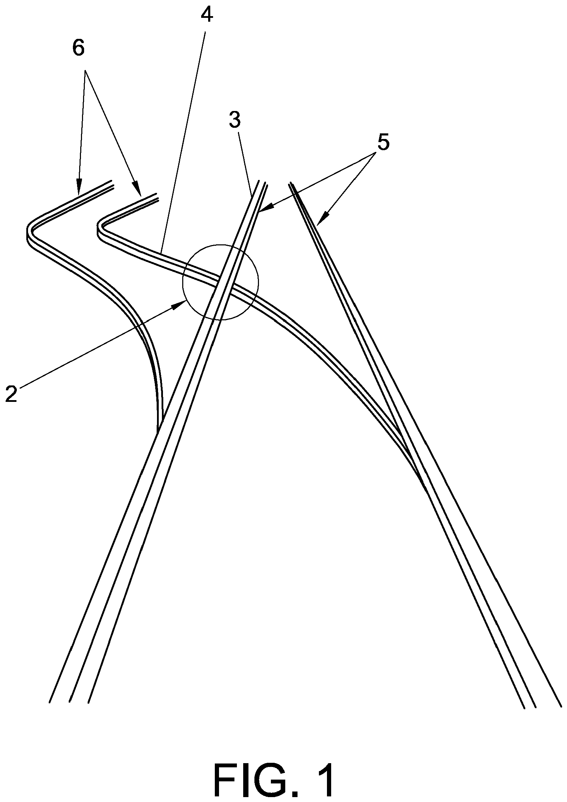

**Figure 1** shows a schematic view of the splitting of a railway track into two tracks including a turnout and a tram movable point turnout structure which is the object of the invention. The aforementioned turnout structure of the invention basically comprises a support cradle, a movable point with transverse displacement located in a central space of the support cradle, facilitating said displacement by a transverse guidance system.

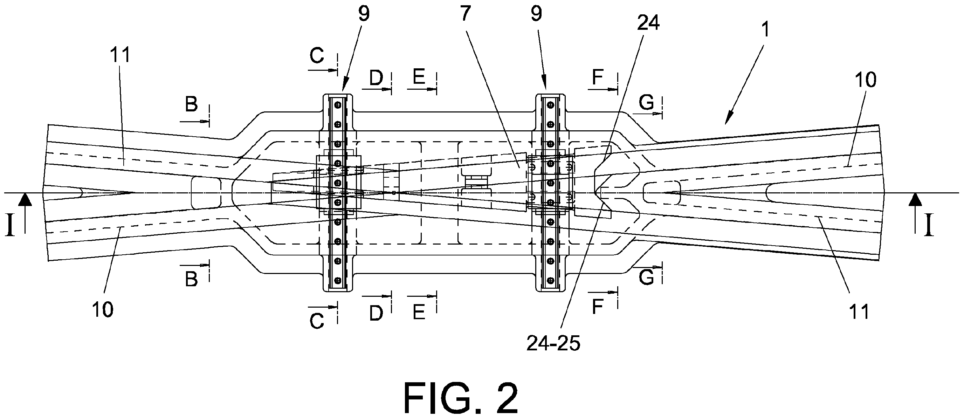

**Figure 2** shows a plant view of the turnout structure.

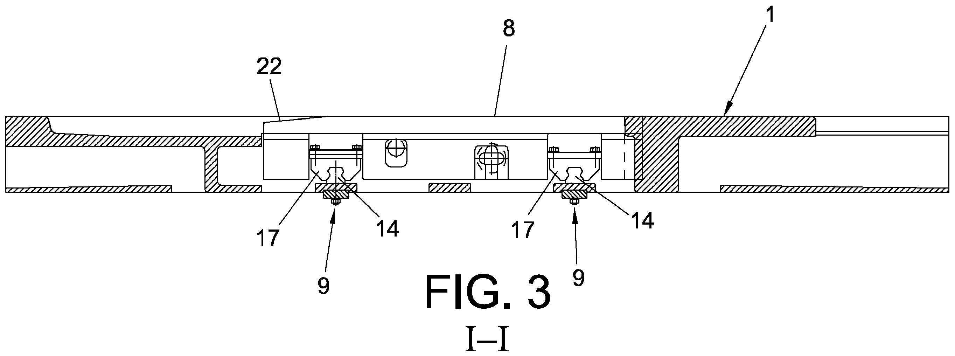

**Figure 3** It shows an elevational view of the turnout structure according to the section I-I of the previous figure.

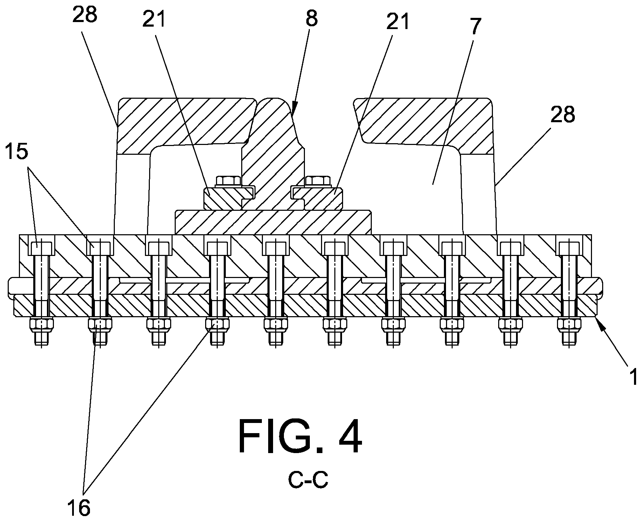

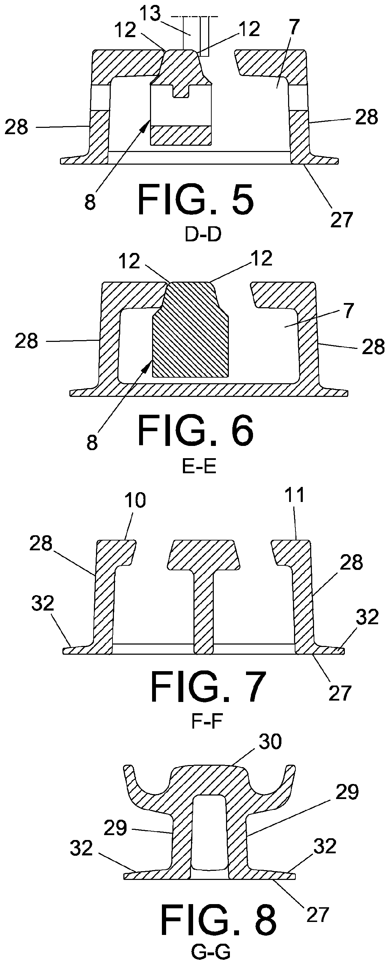

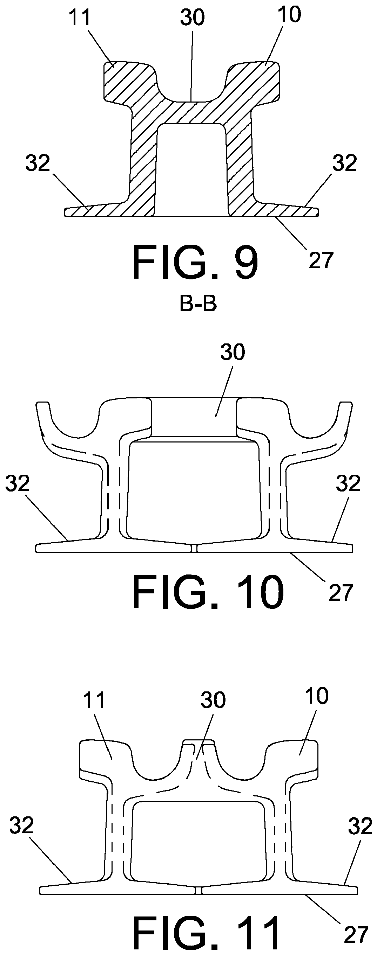

**Figures 4 to 9** show different cross- sectional views of the turnout structure.
**Figures 10 and 11** show profile views of the turnout structure of the invention.

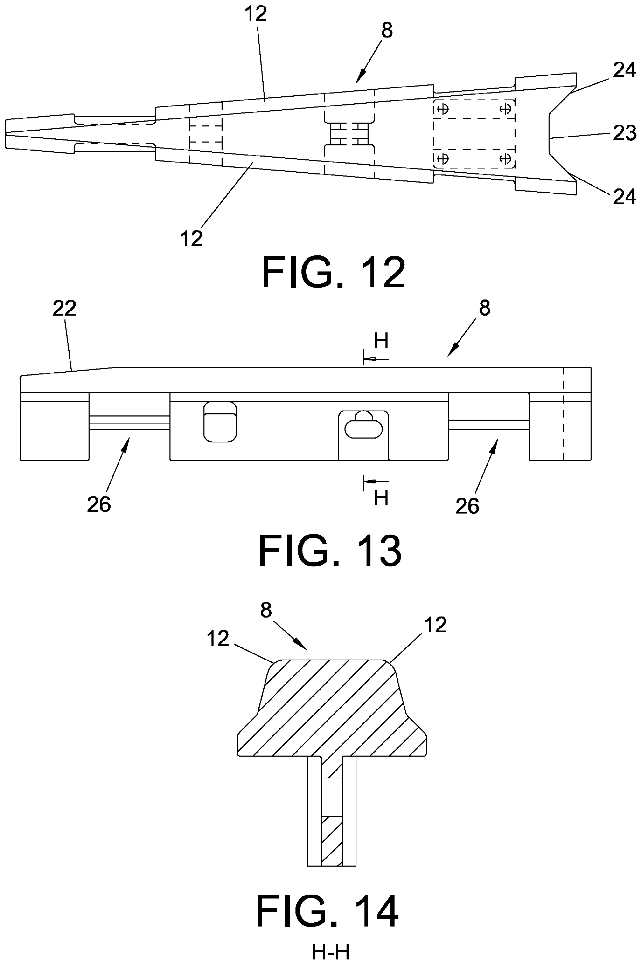

**Figure 12** shows a plant view of the movable point.
**Figure 13** shows an elevational view of the movable point.
**Figure 14** shows a sectional view according to a H-H cross-section of the movable point.

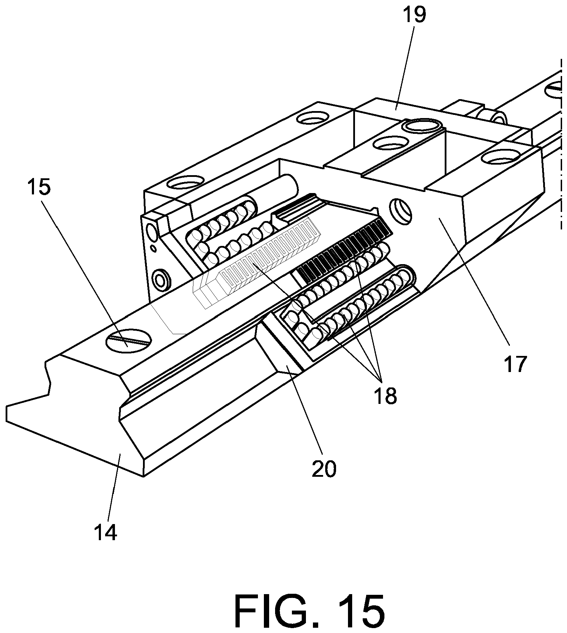

**Figure 15** shows a perspective view of the guidance of the movable point.

### DESCRIPTION OF THE PREFERRED EMBODIMENT

Considering the numbering adopted in the figures, the tram movable point turnout structure is defined by a support cradle 1 fastened in correspondence with the turnout interruption 2 of two rails 3 and 4 belonging to two different tracks 5 and 6, said cradle having a central space 7 housing a movable point 8 independent and linked to the support cradle 1 by means of a pair of transversal guides 9.

The movable point 8 can take two end positions with transverse displacement corresponding to one of the two rails 3 or 4 that intersect depending on the selected track 5 or 6.

On the other hand, the support cradle 1 has two pairs of end rail sections 10 and 11 that are a continuation of the two interrupted rails 3 and 4 which intersect from the two different tracks 5 and 6, so that such end rail sections 10-11 of the support cradle 1 are interrupted in a central area (central space 7) where the movable point 8 with transverse displacement is located.

The movable point 8 has two side rail rolling portions 12 that converge towards the narrowest end of said movable point 8 such that depending on the end position of said movable point 8, the railway or tramway wheel 13 will rest on one or another side rolling portion 13 which will be a continuation of the respective pair of end rail sections 10 or 11 of the support cradle 1.

Each transversal guide 9 comprises a guide-rail 14 immobilised by means of screws 15 and nuts 16, on which a car 17 is attached by means of a guidance system that includes rollers 18, elastic scrapers 19 and protective caps 20, attaching the movable point 8 to said cars.

In addition, it should be noted that the narrowest part of the movable point 8 has on its upper surface of a smooth end ramp 22 descending outwards that facilitates the rolling of the respective wheel 13 of the railway or tramway when contacting with that specific part.

Instead, the widest end of the movable point 8 has a characteristic recess 23 including two planes 24 complemented with two other planes 25 of the support cradle 1 where the movable point 8 stops in its usage end positions.

The movable point 8 has two side recesses 26 encasing the cars 17 of the transversal guides 9.

The support cradle 1 has a characteristic robust structure comprising a horizontal base 27 from the central part from which surrounding side walls 28 with opposite end bracings delimiting the central space 7 where the movable point 8 and also the two transversal guides 9 are housed, extend upward.

Said surrounding side walls 28 extend by their ends in partitions 29 finished at the top by centred bridges 30 and the pairs of end rail sections 10-11.

In turn, the support cradle 1 includes a center rib 31 which includes the planes 25 where the planes 24 of the movable point stop when it is located in one of its stable, end positions, also including longitudinal wings 32 which are an extension of the sides of the horizontal base 27.

## Claims

1. Movable point tram turnout structure, which being located in an interrupted space of two rails intersecting belonging to two different tracks, it comprises:
- an immobilised support cradle (1) having a central space (7) and end rail sections (10-11) converging towards that central space (8) and aligned with the rails (3-4) of the turnout;
- a movable point (8) located in the central space (7), which at the same time is transversally movable, and it is able to be placed stably on two end side positions to be aligned by the side rolling portions thereof (12) with one of the end rail sections (10-11);
- transversal guides (9) located in the central space (7), by means of which the movable point (8) moves toward its end side positions;
**characterised in that** the transversal guides (9) comprise immobilised guide-rails (14), on which transversally movable cars (17) are attached, to which the movable point (8) is fastened.

2. Movable point tram turnout structure, according to claim 1, **characterised in that** the transversal guides (9) include rollers (18), elastic scrapers (19) and protective caps (20).

3. Movable point tram turnout structure, according to claim 1 or 2, **characterised in that** it includes means to limit and stabilize the two end side positions of the movable point (8), said means consisting of a pair of planes (25) that are part of a midrib (31) of the support cradle (1), and other complementary planes (24) established in a recess (23), located in the widest end of the movable point (8).

4. Movable point tram turnout structure, according to any one of the preceding claims, **characterised in that** the narrowest part of the movable point (8) has of a slight end ramp (22) descending downward on its upper surface descending outward.

5. Movable point tram turnout structure, according to any one of claims 1 to 4, **characterised in that** the narrowest and sharpest part of the movable point (8) is fastened by two side flanges (21) fastened to the respective movable car (17).

6. Movable point tram turnout structure, according to any one of claims 1 to 5, **characterised in that** the movable point (8) has side recesses (26) encasing the cars (17) of the transversal guides (9).

7. Movable point tram turnout structure, according to any one of the preceding claims, **characterised in that** the support cradle (1) comprises a horizontal base (27) from which surrounding side walls (28) with opposite bracing delimiting the central space (7) which protrude from the central part of which extend upwards, said surrounding side walls (28) extending by their end in partitions (29) finished at the top by centered bridges (30) and the pairs of end rails (10-11), while the support cradle (1) further includes the midrib (31) which includes the stop planes (25) of the movable point (8) and also longitudinal wings (32) which are an extension of the sides of the horizontal base (27) of the support cradle (1).

## Patentansprüche

1. Straßenbahn-Weichenstruktur mit beweglicher Spitze, die sich in einem unterbrochenen Raum zweier einander kreuzender Schienen befindet, die zu zwei verschiedenen Gleisen gehören, wobei sie umfasst:
ein unbewegliches Stützgestell (1), das einen mittigen Raum (7) sowie Schienen-Endabschnitte (10-11) aufweist, die auf diesen mittigen Raum (7) zur aufeinander zulaufen und auf die Schienen (3-4) der Weiche ausgerichtet sind;
eine bewegliche Spitze (8), die sich in dem mittigen Raum (7) befindet und dabei quer bewegt werden kann und stabil an zwei seitliche Endpositionen gebracht werden kann, an denen sie durch die seitlichen Rollabschnitte (12) derselben auf einen der Schienen-Endabschnitte (10-11) ausgerichtet wird;
Querführungen (9), die sich in dem mittigen Raum (7) befinden und mittels denen sich die bewegliche Spitze (8) auf ihre seitlichen Endpositionen zu bewegt;
**dadurch gekennzeichnet, dass** die Querführungen (9) unbewegliche Führungsschienen (14) umfassen, an denen in Querrichtung bewegliche Schlitten (17) angebracht sind, an denen die bewegliche Spitze (8) befestigt ist.

2. Straßenbahn-Weichenstruktur mit beweglicher Spitze nach Anspruch 1, **dadurch gekennzeichnet, dass** die Querführungen (9) Rollen (18), elastische Abstreifer (19) und Schutzkappen (20) enthalten.

3. Straßenbahn-Weichenstruktur mit beweglicher Spitze nach Anspruch 1 oder 2, **dadurch gekennzeichnet, dass** sie Einrichtungen zum Begrenzen und Stabilisieren der zwei seitlichen Endpositionen der beweglichen Spitze (8) enthält, wobei die Einrichtungen aus einem Paar Flächen (25), die Teil eines Mittelstegs (31) des Stützgestells (1) sind, sowie weiteren komplementären Flächen (24) bestehen, die in einer Aussparung (23) ausgebildet sind, die sich am breitesten Ende der beweglichen Spitze (8) befindet.

4. Straßenbahn-Weichenstruktur mit beweglicher Spitze nach einem der vorangehenden Ansprüche, **dadurch gekennzeichnet, dass** der schmalste Teil der beweglichen Spitze (8) eine leichte Endabschrägung (22) an seiner nach außen abfallenden oberen Fläche hat, die nach unten abfällt.

5. Straßenbahn-Weichenstruktur mit beweglicher Spitze nach einem der Ansprüche 1 bis 4, **dadurch gekennzeichnet, dass** der schmalste und spitzeste Teil der beweglichen Spitze (8) über zwei seitliche Flansche (21) befestigt ist, die an dem jeweiligen beweglichen Schlitten (17) befestigt sind.

6. Straßenbahn-Weichenstruktur mit beweglicher Spitze nach einem der Ansprüche 1 bis 5, **dadurch gekennzeichnet, dass** die bewegliche Spitze (8) seitliche Aussparungen (26) aufweist, die die Schlitten (17) der Querführungen (9) umschließen.

7. Straßenbahn-Weichenstruktur mit beweglicher Spitze nach einem der vorangehenden Ansprüche, **dadurch gekennzeichnet, dass** das Stützgestell (1) einen horizontalen Sockel (27) umfasst, von dem aus sich umschließende Seitenwände (28) mit gegenüberliegenden, den mittigen Raum (7) begrenzenden Verstrebungen, die von dessen Mittelteil vorstehen, nach oben erstrecken, wobei sich die umschließenden Seitenwände (28) an ihrem Ende in Trennwänden (29) erstrecken, die an der Oberseite in mittigen Brücken (30) und den paarigen Schienenenden (10-11) enden, wobei das Stützgestell (1) des Weiteren den Mittelsteg (31), der die Anschlagflächen (25) der beweglichen Spitze (8) enthält, und des Weiteren Längsfüße (32) enthält, die eine Verlängerung der Seiten des horizontalen Sockels (27) des Stützgestells (1) sind.

## Revendications

1. Structure de branchement de tramway à pointe mobile, qui est positionnée dans un espace interrompu d'une intersection de deux rails, appartenant à deux voies différentes, la structure comprenant :
- un berceau de support immobilisé (1) ayant un espace central (7) et des sections de rail d'extrémité (10-11) convergeant vers cet espace central (8) et alignées avec les rails (3-4) du branchement ;
- une pointe mobile (8) positionnée dans l'espace central (7) qui est en même temps transversalement mobile, et qui peut être placée de manière stable dans deux positions latérales d'extrémité pour être alignée par ses parties de roulement latérales (12) avec l'une des sections de rail d'extrémité (10-11) ;
- des guides transversaux (9) positionnés dans l'espace central (7), au moyen desquels la pointe mobile (8) se déplace vers ses positions latérales d'extrémité ;
**caractérisée en ce que** les guides transversaux (9) comprennent des rails de guidage immobilisés (14) sur lesquels des chariots transversalement mobiles (17) sont fixés, auxquels la pointe mobile (8) est fixée.

2. Structure de branchement de tramway à pointe mobile selon la revendication 1, **caractérisée en ce que** les guides transversaux (9) comprennent des rouleaux (18), des racloirs élastiques (19) et des capuchons de protection (20).

3. Structure de branchement de tramway à pointe mobile selon la revendication 1 ou 2, **caractérisée en ce qu'**elle comprend des moyens pour limiter et stabiliser les deux positions latérales d'extrémité de la pointe mobile (8), lesdits moyens se composant d'une paire de plans (25) qui font partie d'une nervure centrale (31) du berceau de support (1), et d'autres plans complémentaires (24) établis dans un évidement (23) positionné dans l'extrémité la plus large de la pointe mobile (8).

4. Structure de branchement de tramway à pointe mobile selon l'une quelconque des revendications précédentes, **caractérisée en ce que** la partie la plus étroite de la pointe mobile (8) a une petite rampe d'extrémité (22) descendant sur sa surface supérieure descendant vers l'extérieur.

5. Structure de branchement de tramway à pointe mobile selon l'une quelconque des revendications 1 à 4, **caractérisée en ce que** la partie la plus étroite et la plus pointue de la pointe mobile (8) est fixée par deux brides latérales (21) fixées sur le chariot mobile (17) respectif.

6. Structure de branchement de tramway à pointe mobile selon l'une quelconque des revendications 1 à 5, **caractérisée en ce que** la pointe mobile (8) a des évidements latéraux (26) enfermant les chariots (17) des guides transversaux (9).

7. Structure de branchement de tramway à pointe mobile selon l'une quelconque des revendications précédentes, **caractérisée en ce que** le berceau de support (1) comprend une base horizontale (27) à partir de laquelle des parois latérales périphériques (28) avec un renfort opposé délimitant l'espace central (7) qui font saillie de la partie centrale de laquelle elles s'étendent vers le haut, lesdites parois latérales périphériques (28) s'étendant, grâce à leur extrémité, en séparations (29) qui se terminent au sommet par des ponts centrés (30) et les paires de rails d'extrémité (10-11), alors que le berceau de support (1) comprend en outre la nervure centrale (31) qui comprend les plans de butée (25) de la pointe mobile (8) et également des ailes longitudinales (32) qui sont une extension des côtés de la base horizontale (27) du berceau de support (1).
